# EUROPÄISCHE PATENTSCHRIFT

(11) **EP 0 309 925 B1**
(45) Veröffentlichungstag und Bekanntmachung des Hinweises auf die Patenterteilung: **02.03.1994**
(21) Anmeldenummer: 88115604.6
(22) Anmeldetag: 22.09.1988
(51) Int. Cl.: G21C 7/10, G21C 7/08

(54) **Verfahren zum Vermeiden einer unzulässigen Wanddickenschwächung an den Steuerstäben eines Steuerelements für Kernreaktorbrennelemente und Einrichtung zur Durchführung des Verfahrens.**
Method for reducing wear on the control rods of a nuclear reactor control element and apparatus for carrying out the method.
Procédé pour reduir l'usure sur les barres de contrôle d'une grappe de contrôle pour un assemblage de combustible d'un réacteur nucléaire et appareil pour mettre en oeuvre ce procédé.

(30) Priorität: 28.09.1987 DE 3732573
(43) Veröffentlichungstag der Anmeldung: 05.04.1989
(73) Patentinhaber: ABB Reaktor GmbH, D-68167 Mannheim (DE)
(72) Erfinder: Hoffmann, Heinz, Dr., D-6141 Einhausen (DE); Pflug, Lutz, Dr., D-6835 Brühl (DE); Grohe, Willi, D-6945 Hirschberg 1 (DE); Ehlers, Klaus, D-6806 Viernheim (DE)
(74) Vertreter: Rupprecht, Klaus, Dipl.-Ing.

(56) Entgegenhaltungen:
- EP-A- 0 139 267
- DD-A- 43 818
- FR-A- 1 234 173
- US-A- 3 971 575
- US-A- 4 678 628

## Beschreibung

Die Erfindung betrifft ein Verfahren zum Vermeiden einer unzulässigen Wanddickenschwächung an den Steuerstäben eines Steuerelements für Kernreaktorbrennelemente, wobei die Steuerstäbe in Führungsrohre eines Kernreaktorbrennelements bzw. eines Steuerelementführungseinsatzes eines Kerngerüstes einführbar sind und wobei jeder Steuerstab eine Bohrung eines Trägers durchsetzt, mit einer Schulter an der Unterseite des Trägers anliegt über seinen mit einem Gewinde versehenen Ende mit einer an der Oberseite des Trägers anlegbaren Mutter befestigt ist.

Ein derartiges Steuerelement ist aus der US-PS 4,678,628 bekannt. Nach einer längeren Einsatzzeit weisen manche Steuerstäbe an bestimmten Bereichen ihrer Umfangsfläche einen Reibabtrag auf, der zu unzulässigen Wanddickenschwächungen führt. Es hat sich gezeigt, daß der durch die Fahrbewegung des Steuerelementes oder durch vom Primärkühlmittel hervorgerufenen Schwingungen entstandener Reibabtrag in der Regel an dem gleichen Umfangsbereich eines Steuerstabes auftritt. Derartig geschwächte Steuerstäbe gelten als defekt und müssen ausgetauscht werden. Die ausgebauten Steuerstäbe stellen nuklearen Abfall dar und müssen entweder aufbereitet oder gelagert werden.

Es stellt sich die Aufgabe, ein verfahren zur Vermeidung einer unzulässigen Wanddickenschwächung an Steuerstäben der gattungsgemäßen Art anzugeben.

Gelöst wird diese Aufgabe erfindungsgemäß dadurch, daß in bestimmten Zeitabständen eine zwischen dem einzelnen Steuerstab und dem Träger bestehende Arretierung aufgehoben wird, daß der Steuerstab in eine andere Position verdreht wird, und daß die Arretierung in der neuen Position wieder hergestellt wird.

Mit diesem Verdrehen der Steuerstäbe in eine andere Position wird die Standzeit der Steuerstäbe erhöht und der Anfall von unerwünschtem nuklearem Abfall wesentlich vermindert.

Eine vorteilhafte Ausgestaltung des Verfahrens zeichnet sich durch die nachfolgenden Verfahrensschritte aus:
- der Träger wird in einem Aufnahmeteil derart abgestützt, daß gegen die unteren Steuerstabenden eine Federkraft wirkt.
- Die Mutter zum Festlegen eines Steuerstabes wird entfernt.
- Der Steuerstab wird soweit gegen die Federkraft nach unten gedrückt, bis die Arretierung freigegeben ist.
- Der Steuerstab wird unter Aufrechterhaltung des Gegendruckes um das gewünschte Maß verdreht.
- Der Gegendruck wird aufgehoben, so daß der Steuerstab durch die Federkraft bis zur Anlage seiner Schulter an dem Träger nach oben bewegt wird.
- Der Steuerstab wird mit der Mutter verspannt.

Das unter einer Wasserabdeckung und somit unter erschwerten Bedingungen erfolgende Drehen eines Steuerstabes reduziert sich somit auf ein Aufbringen einer Gegenkraft und ein Verdrehen um ein vorgebbares Maß unter Aufrechterhaltung der Gegenkraft. Nach dem Aufheben der Gegenkraft drückt die auf das untere Stabende wirkende Federkraft den Steuerstab selbsttätig in seine neue Arretierungsposition.

Eine Einrichtung zur Durchführung des Verfahrens zeichnet sich dadurch aus, daß der Träger auf einem Aufnahmeteil abgestützt ist, das mit der Konfiguration des Steuerelements entsprechenden Durchbrüchen versehen ist, daß unterhalb des Aufnahmeteils ein Widerlager angeordnet ist, das in Achsrichtung der Durchbrüche verlaufende Aussparungen zur Aufnahme je einer Druckfeder aufweist, und daß ein Werkzeug zur Durchführung einer Axial- und Drehbewegung des Steuerstabes vorgesehen ist.

Der Abstand zwischen dem Aufnahmeteil und dem Widerlager sowie die Federkraft und der Federweg ist so bemessen, daß bei aufgesetztem Träger die Steuerstäbe die Druckfedern unter leichtem Gegendruck kontakten und jeder Steuerstab bis zur Freigabe der Arretierung nach unten drückbar ist.

Das Widerlager ist vorzugsweise als Platte ausgebildet, die über Streben mit dem Aufnahmeteil verbunden ist. Als Aussparungen zur Aufnahme der Druckfedern dienen in die Platte eingebrachte Grundbohrungen, deren Tiefe größer ist als die Höhe der ungespannten Druckfeder.

Nach einer anderen Ausgestaltung trägt das Widerlager Rohrstücke zur Aufnahme der Druckfeder.

Anhand von Ausführungsbeispielen und den Figuren 1 bis 12 wird das erfindungsgemäße Verfahren zur Vermeidung von unzulässigen Wanddickenschwächungen, sowie eine Einrichtung und ein Steuerelement zur Durchführung des Verfahrens beschrieben.

Dabei zeigt:
- Fig. 1: eine Vorderansicht eines Steuerelementes,
- Fig. 2: eine Ansicht in Pfeilrichtung II der Fig. 1,
- Figur 3: eine Teilansicht in Pfeilrichtung III auf einen Träger für die Steuerstäbe in einem größeren Maßstab,
- Figur 4: einen Schnitt entlang der Linie IV-IV der Figur 3 durch den gesamten Träger,
- Figur 4a: einen Teilschnitt entlang der Linie IVa der Figur 4,
- Figur 5: einen einzelnen Steuerstab in einem größeren Maßstab,
- Figur 6: einen Schnitt entlang der Linie VI-VI der Figur 5 in einem größeren Maßstab,
- Figur 7 und 8: eine andere Ausgestaltungen der Ausführung nach Figur 3,
- Figur 9 und 10: eine als Mehrkant ausgebildete Bohrung des Trägers zur Aufnahme eines Steuerstabes,
- Figur 11: eine Einrichtung zur Durchführung des Verdreh- und Arretiervorganges in einem Längsschnitt und
- Figur 12: eine andere Ausbildung der Einrichtung nach Figur 11.

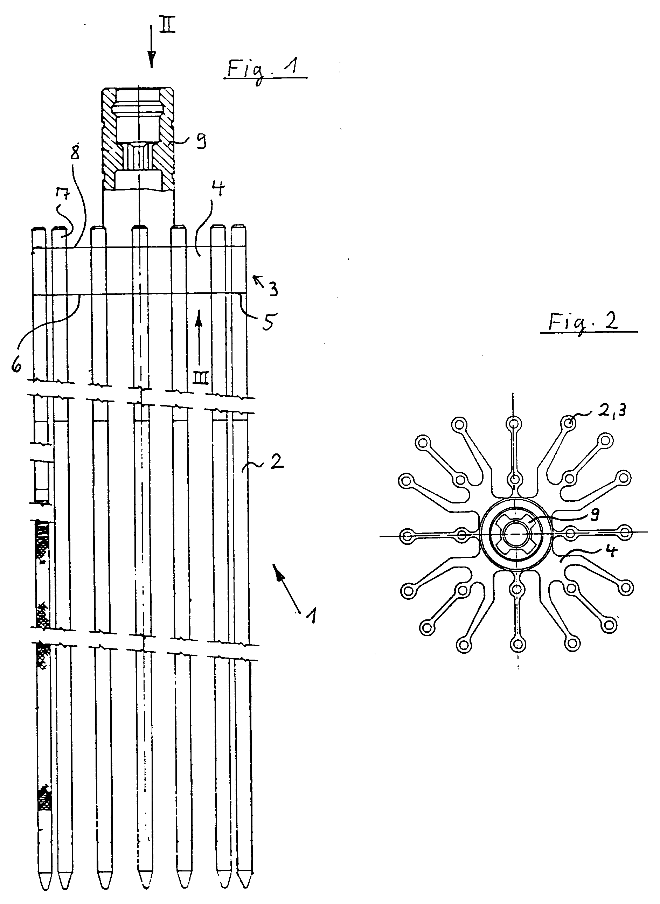

Die Figuren 1 und 2 zeigen ein Steuerelement 1, das eine Vielzahl von Steuerstäben 2 aufweist. Jeder Steuerstab durchsetzt eine Bohrung 3 eines spinnenartig ausgebildeten Trägers 4. Der ein Absorbermaterial enthaltende Steuerstab 2 liegt mit seiner Schulter 5 an der Unterseite 6 des Trägers 4 an. Das über den Träger 4 hinausragende Ende des Steuerstabes 2 ist mit einem Gewinde zur Aufnahme einer Mutter 7 versehen, die gegen die Oberseite 8 des Trägers 4 verspannt ist und den Steuerstab festlegt. Ein Kupplungsstück 9 ist im Zentrum des Trägers 4 angeordnet und dient zur Aufnahme einer nicht dargestellten Antriebsspindel für die vertikale Bewegung der Steuerstäbe relativ zu nicht dargestellten Führungsrohren eines ebenfalls nicht dargestellten Kernreaktorbrennelementes bzw. eines Steuerelementführungseinsatzes des Kerngerüstes.

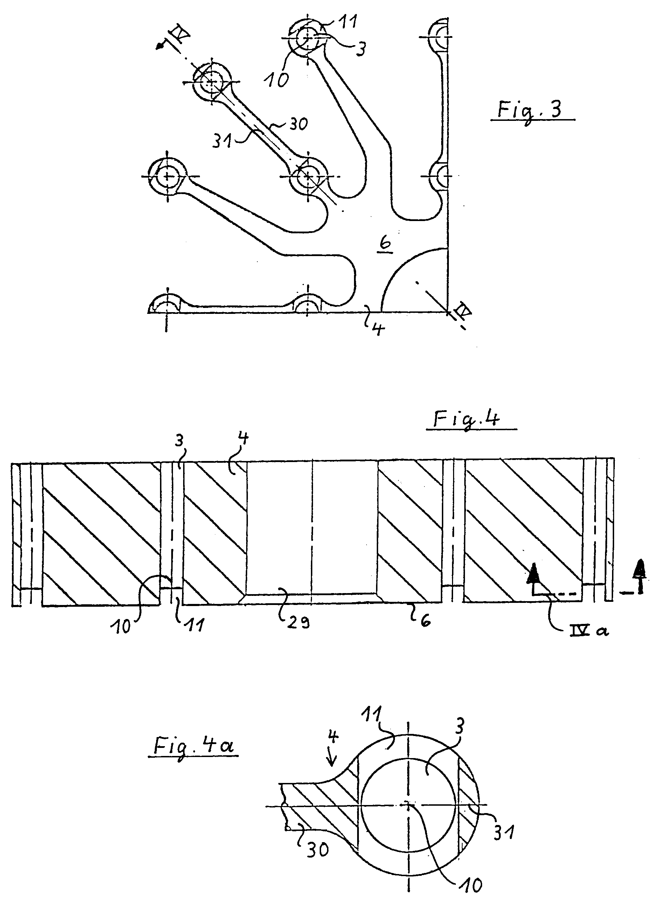

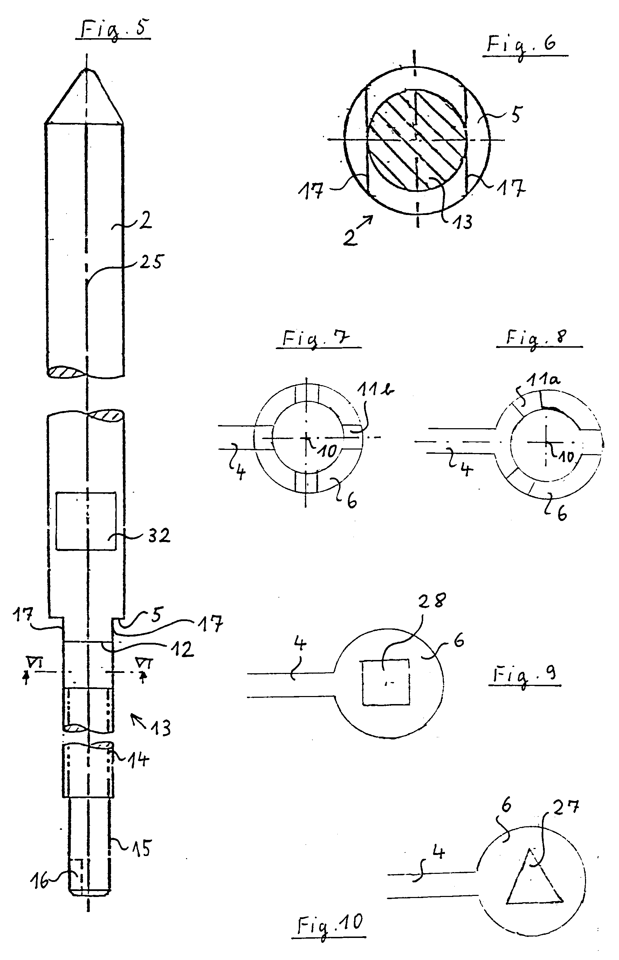

Die Figur 3 zeigt in einer Teilansicht in Pfeilrichtung III der Figur 2 die Unterseites 6 des Trägers 4. Auf die Darstellung des Kupplungsstückes 9 wurde aus Gründen der besseren Übersicht bei der Figur 2 ebenso verzichtet, wie bei der einen Schnitt durch den Träger nach Linie IV-IV darstellenden Figur 4. Es ist lediglich eine Zentrumsbohrung 29 zur Aufnahme des Kupplungsstückes 9 zu erkennen. In der Unterseite 6 des Trägers 4 ist eine senkrecht zur Achse 10 der Bohrung 3 und senkrecht zur Achse 31 eines Spinnenarmes 30 des Trägers 4 verlaufende Nut 11 eingebracht, deren Breite etwa dem Durchmessermaß der Bohrung 3 entspricht. In einem Teilschnitt durch die Nut 11 (Figur 4a) ist in einem größeren Maßstab ihre Anordnung im Spinnenarm 30 besser zu erkennen.

Ein in den Figuren 5 und 6 in einem größeren Maßstab dargestellter Steuerstab 2 weist eine bis zur Linie 12 reichende Andrehung 13 auf, die auf einem Teilbereich mit einem Gewinde 14 versehen ist. Ein vom Ende des Steuerstabes 2 bis zum Gewinde 14 erstreckter Absatz 15 ist auf den Kerndurchmesser des Gewindes 14 abgedreht und mit einer zum Steuerstabende hin offenen Längsnut 16 versehen. Wie in Zusammenhang mit der Figur 6 zu ersehehen ist, ist vom Ende der Andrehung 13 (symbolisiert durch die Linie 12) der Steuerstab unter Bildung einer Schulter 5 etwa bis auf den Durchmesser der Andrehung 13 mit zwei parallel zueinander erstreckten Flächen 17 versehen. Die Breite bzw. die Tiefe der Nut 11 (Figur 3, 4) und die Anflächung 17 sind so aufeinander abgestimmt, daß der Steuerstab 2 unter Einhaltung eines geringen seitlichen Spiels in die Bohrung 3 und in die Nut 11 einführbar ist und mit seiner durch die Anflächung 17 gebildeten Schulter 5 auf der Unterseite 6 des Trägers 4 anliegt. In bekannter Weise dient die Mutter 7 zur Befestigung des Steuerstabes 2 an den Träger 4.

Soll ein unerzulässiger Reibabtrag am Steuerstab 2 vermieden werden, wird in bestimmten Zeitintervallen die Mutter 7 entfernt und der Steuerstab 2 soweit in Richtung Führungsrohr herabgelassen, bis die zwischen der Anflächung 17 und der Nut 11 gebildete Arretierung aufgehoben ist. Unter Einsatz eines in die Längsnut 16 eingreifenden nicht dargestellten Werkzeuges erfährt der Steuerstab 2 eine Drehung um 180° und wird durch Bewegung in Richtung Träger 4 wieder mit demselben arretiert und über die Mutter 7 befestigt.

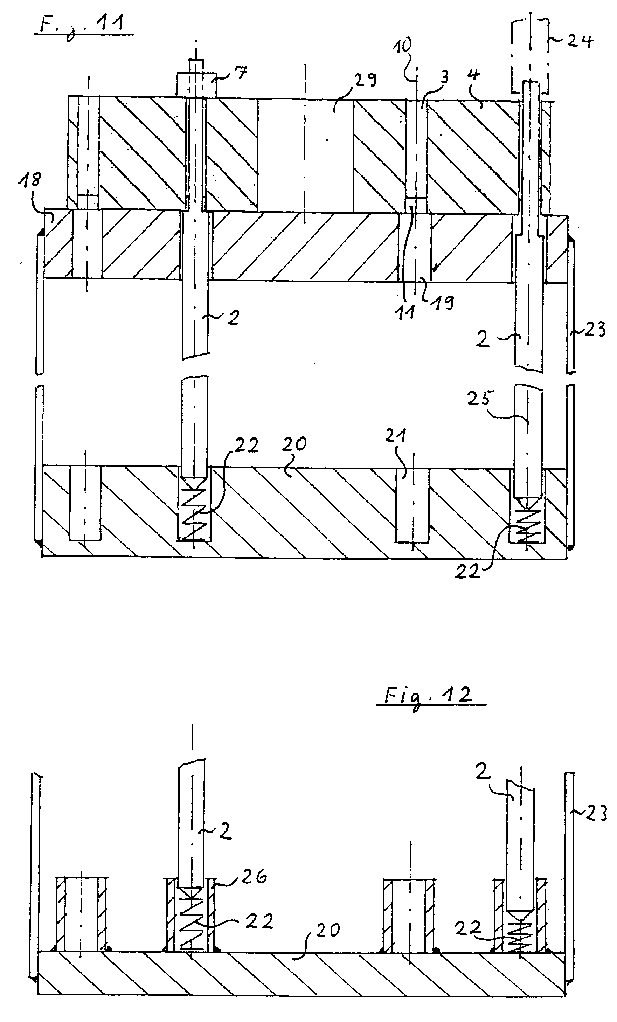

Für eine Verdrehbewegung mit 90° oder 120° Arretierung ist die Unterseite 6 des spinnenartigen Trägers 4 mit drei bzw. vier senkrecht zur Achse 10 der Bohrung 3 verlaufenden Nuten 11a, 11b versehen (Figur 7 und 8). In diese Nuten ragen dann gleichartige von der Schulter 5 des Steuerstabes 2 auskragende, nicht dargestellte Vorsprünge.

Eine andere Art der Arretierung ist aus Figur 9 und 10 zu ersehen. Danach ist die Bohrung 3 des Trägers 4 über mindestens einen Teil der Gesamtdicke des Trägers 4 als Drei- bzw. Vierkant 27, 28 ausgebildet. Einen entsprechenden Querschnitt muß dann auch der Steuerstab anstelle der Anflächung 17 aufweisen.

Anhand der Figuren 11 und 12 wird ein Verfahren zum Drehen und Arretieren eines Steuerstabes 2 des vorgehend erlaüterten Steuerelementes 1 beschrieben. Die dazu erforderliche Einrichtung besteht nach Figur 11 aus einem als quadratische Platte ausgebildeten Aufnahmeteil 18, das mit Durchbrüchen 19 einer solchen Konfiguration versehen ist, die ein Durchführen der Steuerstäbe 2 bis zum Aufsitzen des Trägers 4 auf dem Aufnahmeteil 18 erlaubt. Unterhalb des Aufnahmeteils 18 ist ein ebenfalls als quadratische Platte ausgebildetes Widerlager 20 angeordnet, das mit Grundbohrungen 21 versehen ist, die in Achsrichtung der Durchbrüche 19 verlaufen und den gleichen Durchlaßquerschnitt wie diese aufweisen. Die Grundbohrungen 21 nehmen je eine Druckfeder 22 auf, die im ungespannten Zustand unterhalb der Oberkante der Grundbohrung endet, so daß eine Führung der Steuerstäbe relativ zur Grundbohrung 21 noch gegeben ist. Das Aufnahmeteil 18 und das Widerlager 20 sind mittels Streben 23 zu einer Einheit verbunden. Wenn der Träger 4 auf dem Aufnahmeteil 18 abgestützt ist, werden die Druckfedern von den unteren Steuerstabenden nur geringfügig zusammengedrückt. In der linken Zeichnungshälfte der Figur 11 ist ein noch mit der Mutter 7 befestigter Steuerstab 2 dargestellt, der die Druckfeder 22 gerade kontaktet. Nach der Darstellung in der rechten Zeichnungshälfte der Figur 11 ist die Mutter 7 bereits entfernt. Ein lediglich angedeutetes Werkzeug 24 hat den Steuerstab soweit gegen die Kraft der Druckfeder 22 nach unten gestoßen, daß die Arretierung zwischen dem Steuerstab 2 und dem Träger 4 außer Eingriff gebracht ist. Die Darstellung von lediglich zwei Steuerstäben wurde zum Zwecke einer übersichtlichen Darstellung gewählt. Unter Beibehaltung der gegen die Druckfeder gerichteten Kraft erfolgt ein Verdrehen des Steuerstabes um den gewünschten Verdrehwinkel. Zur Ausführung der um die Mittenachse 25 des Steuerstabes erfolgenden Verdrehbewegung greift das Werkzeug 24 in die Längsnut 16 (Figur 5) des Steuerstabes 2 ein. Eine andere Art der Drehbewegung läßt sich mit einem nicht dargestellten Werkzeug ausführen, welches an einer Abflachung 32 (Figur 5) des Steuerstabes angreift. Nach dem Aufheben der durch das Werkzeug 24 ausgeübten Kraft gelangt der Steuerstab selbsttätig in eine andere Arretierstellung. Die Gefahr eines unerwünschten Reibabtrages und dadurch eine Schwächung des Steuerstabes wird somit ferngehalten.

Die Figur 12 zeigt eine andere Ausbildung der Einrichtung nach Figur 11. Da sie sich nur im Bereich des Widerlagers 20 unterscheidet, ist nur der untere Teil der Einrichtung dargestellt. Von der Oberfläche des Widerlagers 20 ragen auf der den Durchbrüchen nach Figur 11 zugeordneten Achse Rohrstücke 26 senkrecht nach oben. Sie weisen den gleichen Öffnungsquerschnitt auf wie die Grundbohrung 21 nach Figur 11. Anstatt der Grundbohrungen nehmen die Rohrstücke 26 die Druckfedern 22 auf. Ein wesentlicher Vorteil dieser Ausbildung ist darin zu sehen, daß die das Widerlager 20 bildende Platte weniger stark ausgelegt werden muß.

### Bezugszeichenliste

- 1: Steuerelement
- 2: Steuerstab
- 3: Bohrung
- 4: Träger
- 5: Schulter
- 6: Unterseite
- 7: Mutter
- 8: Oberseite
- 9: Kupplungsstück
- 10, 31: Achse
- 11: Nut
- 11a: Nut
- 11b: Nut
- 12: Linie
- 13: Andrehung
- 14: Gewinde
- 15: Absatz
- 16: Längsnut
- 17: Flächen
- 18: Aufnahmeteil
- 19: Durchbruch
- 20: Widerlager
- 21: Grundbohrung
- 22: Druckfeder
- 23: Strebe
- 24: Werkzeug
- 25: Mittenachse
- 26: Rohrstück
- 27: Dreikant
- 28: Vierkant
- 29: Zentrumsbohrung
- 30: Spinnenarm
- 32: Abflachung

## Patentansprüche

1. Verfahren zum Vermeiden einer unzulässigen Wanddickenschwächung an den Steuerstäben (2) eines Steuerelements (1) für Kernreaktorbrennelemente, wobei die Steuerstäbe in Führungsrohre eines Kernreaktorbrennelements bzw. eines Steuerelementführungseinsatzes eines Kerngerüstes einführbar sind und wobei jeder Steuerstab eine Bohrung (3) eines Trägers (4) durchsetzt, mit einer Schulter (5) an der Unterseite (6) des Trägers anliegt und über sein mit einem Gewinde (14) versehenen Ende mit einer an der Oberseite (8) des Trägers anlegbaren Mutter (7) befestigt ist, **dadurch gekennzeichnet,** daß in bestimmten Zeitabständen eine zwischen dem einzelnen Steuerstab (2) und dem Träger (4) bestehende Arretierung aufgehoben wird, daß der Steuerstab in eine andere Position verdreht wird und daß die Arretierung in der neuen Position wieder hergestellt wird.

2. Verfahren nach Anspruch 1, gekennzeichnet durch folgende Schritte:
a) Der Träger (4) wird in einem Aufnahmeteil (18) derart abgestützt, daß gegen die unteren Steuerstabenden eine Federkraft wirkt;
b) die Mutter (7) zum Festlegen eines Steuerstabes (2) wird entfernt;
c) der Steuerstab (2) wird soweit gegen die Federkraft nach unten gedrückt, bis die Arretierung freigegeben ist;
d) der Steuerstab (2) wird unter Aufrechterhaltung des Gegendruckes um das gewünschte Maß verdreht;
e) der Gegendruck wird aufgehoben, so daß der Steuerstab durch die Federkraft bis zur Anlage seiner Schulter (5) an den Träger (4) nach oben bewegt wird;
f) der Steuerstab (2) wird mit der Mutter (7) verspannt.

3. Einrichtung zur Durchführung des Verfahrens nach Anspruch 1 oder 2, dadurch gekennzeichnet, daß der Träger (4) auf einem Aufnahmeteil (18) abgestützt ist, das mit der Konfiguration des Steuerelements entsprechenden Durchbrüchen (19) versehen ist, daß unterhalb des Aufnahmeteiles (18) ein Widerlager (20) angeordnet ist, das in Achsrichtung der Durchbrüche (19) verlaufende Aussparungen (21, 26) zur Aufnahme je einer Druckfeder (22) aufweist, und daß ein Werkzeug (24) zur Durchführung einer Axial- und Drehbewegung des Steuerstabes (2) vorgesehen ist.

4. Einrichtung nach Anspruch 3, dadurch gekennzeichnet, daß das Widerlager (20) als Platte ausgebildet ist, die über Streben (23) mit dem Aufnahmeteil (18) verbunden ist, und daß als Aussparungen zur Aufnahme der Druckfeder (22) in die Platte eingebrachte Grundbohrungen (21) dienen, deren Tiefe größer ist als die Höhe der ungespannten Druckfeder (22).

5. Einrichtung nach Anspruch 3, dadurch gekennzeichnet, daß das Widerlager (20) Rohrstücke (26) zur Aufnahme der Druckfedern (22) trägt.

## Claims

1. Method of avoiding an impermissible reduction of wall thickness on the control rods (2) of a control element (1) for nuclear reactor fuel elements, the control rods insertable into guide tubes of a nuclear reactor fuel element or of a control element guide insert of a core structure, and wherein each control rod passes through a bore (3) in a carrier (4), bears against the underside (6) of the carrier by means of a shoulder (5), and is fastened by its end, which is provided with a screw thread (14), by a nut (7) which can be laid against the upper face (8) of the carrier, characterized in that, at specific intervals of time, a locking existing between the individual control rod (2) and the carrier (4) is released, in that the control rod is turned to a different position, and in that the locking is restored in the new position.

2. Method according to Claim 1, characterized by the following steps:
a) The carrier (4) is supported in a holder (18) such that a spring force acts against the bottom ends of the control rods;
b) the nut (7) used for fixing a control rod (2) is removed;
c) the control rod (2) is pressed downwards against the spring force until the locking is released;
d) the control rod (2) is turned to the desired extent while the counterpressure is maintained;
e) the counterpressure is released, so that the control rod is moved upwards by the spring force until its shoulder (5) bears against the carrier (4);
f) the control rod (2) is clamped by the nut (7).

3. Apparatus for implementing the method according to Claim 1 or 2, characterized in that the carrier (4) is supported on a holder (18) which is provided with through holes (19) corresponding to the configuration of the control element, in that underneath the holder (18) an abutment (20) is disposed which has recesses (21, 26), extending in the axial direction of the through holes (19), to receive in each case a compression spring (22), and in that a tool (24) is provided to bring about an axial and rotary movement of the control rod (2).

4. Apparatus according to Claim 3, characterized in that the abutment (20) is in the form of a plate which is connected by struts (23) to the holder (18), and in that blind bores (21) formed in the plate serve as recesses to hold the compression spring (22), their depth being greater than the height of the unstressed compression spring (22).

5. Apparatus according to Claim 3, characterized in that the abutment (20) carries lengths of tubing (26) to hold the compression springs (22).

## Revendications

1. Procédé pour prévenir un affaiblissement inadmissible de l'épaisseur de paroi sur les crayons de contrôle (2) d'une grappe de contrôle (1) pour assemblages combustibles de réacteurs nucléaires, les crayons de contrôle pouvant être engagés dans des tubes-guides d'un assemblage combustible de réacteur nucléaire ou d'un insert de guidage de grappe de contrôle d'une ossature de coeur, chaque crayon de contrôle traversant un trou (3) d'un support, s'appliquant par un épaulement (5) contre le côté inférieur (6) du support et étant fixé à son extrémité munie d'un filetage (14) à l'aide d'un écrou (7) pouvant être appliqué contre le côté supérieur (8) du support, caractérisé par le fait qu'à des intervalles de temps déterminés, un verrouillage existant entre le crayon de contrôle (2) individuel et le support (4) est supprimé, que le crayon de contrôle est tourné dans une autre position et que le verrouillage est rétabli dans la nouvelle position.

2. Procédé suivant la revendication 1, caractérisé par les phases opératoires suivantes :
a) le support (4) est soutenu dans une partie de réception (18) de telle manière qu'une force de ressort agisse contre les extrémités inférieures des crayons de contrôle ;
b) l'écrou (7) pour la fixation d'un crayon de contrôle (2) est enlevé ;
c) le crayon de contrôle (2) est poussé à l'encontre de la force de ressort vers le bas jusqu'à ce que le verrouillage soit libéré ;
d) le crayon de contrôle (2) est tourné de la valeur désirée, avec maintien de la contre-pression ;
e) la contre-pression est supprimée, de sorte que le crayon de contrôle est déplacé vers le haut par la force de ressort jusqu'à l'application de son épaulement (5) contre le support (4) ; et
f) le crayon de contrôle (2) est bloqué à l'aide de l'écrou (8).

3. Dispositif pour la mise en oeuvre du procédé suivant la revendication 1 ou 2, caractérisé par le fait que le support (4) est maintenu sur une partie de réception (18) qui est munie de passages (19) correspondant à la configuration de la grappe de contrôle, qu'en dessous de la partie de réception (18) est disposé un contre-appui (20) qui présente des évidements (21, 26) orientés suivant la direction de l'axe des passages (19) et servant à recevoir chacun un ressort de compression (22), et qu'il est prévu un outil (24) pour faire effectuer au crayon de contrôle (2) un mouvement axial et de rotation.

4. Dispositif suivant la revendication 3, caractérisé par le fait que le contre-appui (20) est réalisé sous la forme d'une plaque qui est reliée par des entretoises (23) à la partie de réception (18), et que les évidements pour recevoir les ressorts de compression (22) sont constitués par des trous borgnes (21) ménagés dans la plaque, la profondeur des trous étant supérieure à la hauteur des ressorts de compression (22) détendus.

5. Dispositif suivant la revendication 3, caractérisé par le fait que le contre-appui (20) porte des tronçons de tube (26) pour recevoir les ressorts de compression (22).
